(19) Europäisches Patentamt
European Patent Office
Office européen des brevets

(11) EP 0 441 591 B1

## (12) EUROPEAN PATENT SPECIFICATION

(45) Date of publication and mention
of the grant of the patent:
**10.06.1998 Bulletin 1998/24**

(51) Int Cl.$^6$: **G09G 3/36**

(21) Application number: **91300930.4**

(22) Date of filing: **05.02.1991**

(54) **A method for driving a liquid crystal panel**

Steuerverfahren für eine Flüssigkristallanzeigetafel

Méthode de commande d'un panneau d'affichage à cristaux liquides

(84) Designated Contracting States:
**DE FR GB**

(30) Priority: **06.02.1990 JP 26415/90**

(43) Date of publication of application:
**14.08.1991 Bulletin 1991/33**

(73) Proprietor: **SEIKO EPSON CORPORATION**
**Shinjuku-ku Tokyo (JP)**

(72) Inventor: **Yamazaki, Katsunori**
**Suwa-shi, Nagano-ken (JP)**

(74) Representative: **Sturt, Clifford Mark et al**
**J. MILLER & CO.**
**9 John Street**
**London WC1N 4JH (GB)**

(56) References cited:
**EP-A- 0 303 510       DE-A- 3 906 924**
**US-A- 4 808 991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method for driving a liquid crystal panel.

A driving method, known as a voltage averaging method, has generally been employed hitherto for driving a matrix type liquid crystal panel having a plurality of scanning electrodes and a plurality of signalling electrodes intersecting one another to form a dot matrix. In this method, a selection voltage is applied successively to all the scanning electrodes during "one frame" (the scanning electrodes to which a selection voltage is applied are called "selected" here-inafter). A lighting voltage or a non-lighting voltage is applied to respective signalling electrodes synchronously therewith. The process is cyclically repeated. Thus, each dot of a display pattern is lit or is not lit to create a display. A plurality of frames are defined as one period. The frequency for lighting or not lighting each display dot is cyclically changed every frame for realising tones in the grey scale.

A driving method is also known in which the polarity of the voltages impressed on the liquid crystal panel is periodically inverted so as to avoid applying a DC voltage to the liquid crystal panel.

In particular, a method (called a first method) is well known in which the phase with which each display dot on any respective scanning electrode flickers on and off is made the same irrespective of the positions of the associated signalling electrodes. A further method (called a second method) is also well known in which the phase with which each display dot on any respective scanning electrode flickers on and off is varied according to the position of the associated signalling electrode.

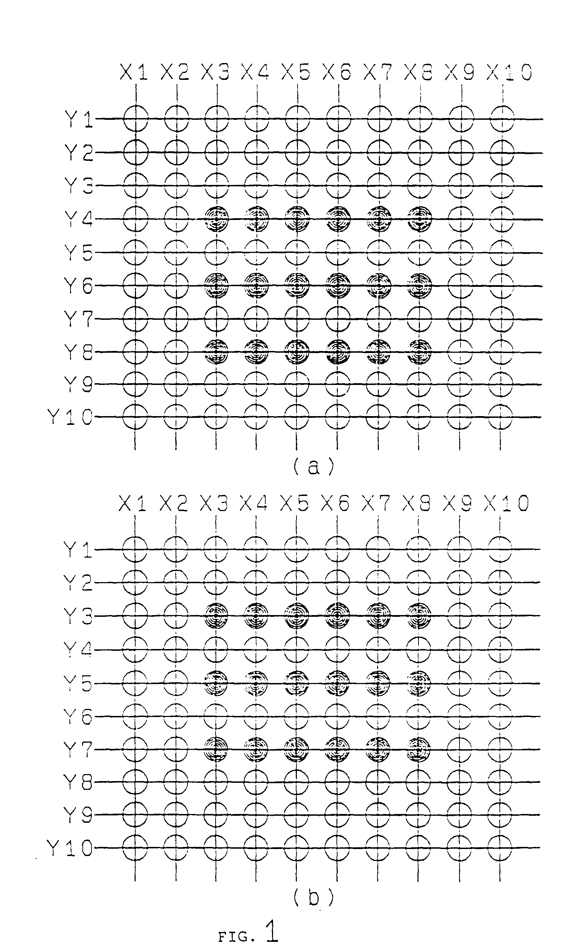

The first method will be described with reference to Figures 1 (a) and 1 (b). Figures 1 (a) and 1 (b) are views showing typical display contents of the same liquid crystal panel in a first frame and a second frame, respectively. In Figure 1, the references Y1 to Y10 represent the scanning electrodes, and the references X1 to X10 represent the signalling electrodes. Points where the scanning electrodes Y1 to Y10 and the signalling electrodes X1 to X10 intersect each other function to provide display dots for creating a display, a mark o representing a non-lit dot and a mark ● representing a lit dot. The scanning electrodes Y1 to Y10 are selected in the order Y1 to Y10. In this example, a square is displayed as a half tone image in the centre of the panel.

As illustrated, display dots on the odd numbered scanning electrodes (Y3, Y5, Y7) are not lit in the first frame and are lit in the second frame, thus flickering, so understood, with the same phase irrespective of the positions of the signalling electrodes X1 to X10 associated with those display dots. Similarly, the display dots on the even numbered scanning electrodes (Y4, Y6, Y8) are lit in the first frame, but are not lit in the second frame, again flickering with the same phase. Thus, the first method equalises the phase of the flickering cycle of all the display dots on each scanning electrode irrespective of the positions of the corresponding signalling electrodes.

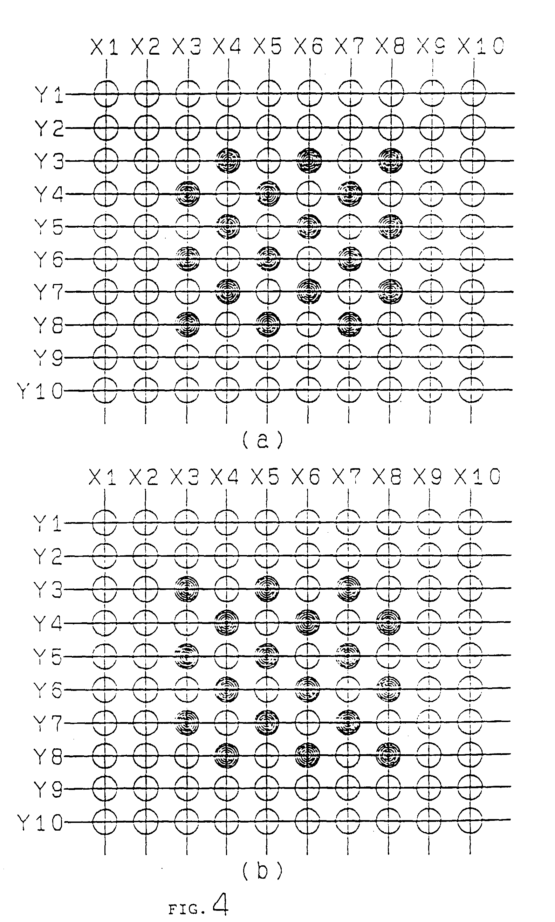

Next, the second method will be described with reference to Figures 4 (a) and 4 (b). Figures 4 (a) and 4 (b) show typical display contents of the same liquid crystal panel in a first frame and a second frame, respectively. The features of this panel other than the display contents are the same as in Figure 1 and, therefore, a further description will be omitted.

As illustrated in Figure 4, the display dots provided by the odd numbered scanning electrodes (Y3, Y5, Y7) and the odd numbered signalling electrodes (X3, X5, X7), and the display dots provided by the even numbered scanning electrodes (Y4, Y6, Y8) and the even numbered signalling electrodes (X4, X6, X8) are not lit in the first frame, but are lit in the second frame. By contrast, the display dots provided by the even numbered scanning electrodes (Y4, Y6, Y8) and the even numbered signalling electrodes (X4, X6, X8), and the display dots provided by the odd numbered scanning electrodes (Y3, Y5, Y7) and the odd numbered signalling electrodes (X3, X5, X7) are not lit in the first frame, but are lit in the second frame, thus flickering, so understood, with different phases according to the position of the associated signalling electrode (the number of such signalling electrode). The second method, therefore, varies the phase of the flickering cycles of the display dots provided on the scanning electrodes according to the position of the signalling electrodes.

The first method is described in EP-A-0 303 510. However, a problem arises with the first method in that, when the selected scanning electrodes are changed successively, unevenness arises in the display (cross talk arises when displaying a "zebra" pattern) according to a difference I in the number of the display dots lit on a selected scanning electrode and the number of dots to be lit on the scanning electrode which is to be selected next. In general, when the selected scanning electrode changes from the nth scanning electrode to the (n + 1)th scanning electrode, if the number of lit dots on the nth scanning electrode is $N_{ON}$ and the number of lit dots on the (n + 1)th scanning electrode is $M_{ON}$, and if the difference I obtained (I = $N_{ON}$ - $M_{ON}$ ) is negative, then a spike voltage tending towards the level of the lighting voltage is generated on each scanning electrode according to the absolute value of the difference I. When the difference I is positive, a spike voltage tending towards the level of the non-lighting voltage is generated according to the absolute value of the difference I.

Accordingly, when the selected scanning electrode shifts successively, then, for so long as the difference I has a substantial absolute value, considerable unevenness arises in the effective voltage applied to the display dots due to the spike voltage, thus promoting unevenness of the display.

For example, when a display is effected according to the first method represented in Figure 1 and all the display dots on each scanning electrode are lit, or not lit, at once in each frame, then as the selection shifts from the scanning electrode Y3 through to the scanning electrode Y8, a big difference I is generated. By way of example, the difference I is 6 when the scanning electrode is changed from Y4 to Y5. Consequently, considerable unevenness in the display unavoidably results.

In the second method represented in Figure 4, the difference in the number of lit dots from one selected scanning electrode to the next is minimised (nil, for example, when the selected scanning electrode changes from Y4 to Y5), thereby making it possible to avoid unevenness in the display. That is, the construction is such that a charge and discharge rate for the electric charge for the display dots provided on some selected scanning electrode and each odd numbered signalling electrode is equal to a charge and discharge rate for the electric charge for display dots provided on the selected scanning electrode and each even numbered signalling electrode.

However, in the case of a colour liquid crystal panel having a filter of three colours or more, where signalling electrodes are disposed very close together, there may be a case where an element for supplying a driving wave form to the signalling electrodes cannot be connected to the same end of all the signalling electrodes, and must consequently be connected alternately to the opposite ends (the upper and lower ends as shown) of the signalling electrodes to moderate the connection density. However, in Figure 4, when the driving wave form is applied, for example, to the odd numbered signalling electrodes (X1, X3, X5, X7, X9) from above, and the driving wave form is applied to the even numbered signalling electrodes (X2, X4, X6, X8, X10) from below, there will then arise a unevenness in the display carried out according to the second method, as before.

While a detailed description will be omitted here, when a grey scale tone display is provided according to the second method, for example, on an upper portion of the liquid crystal panel, a charge and discharge rate for the electric charge for the display dots provided by the odd numbered signalling electrodes with the driving wave form applied thereto from above is greater than a charge and discharge rate for the electric charge for the display dots provided by the even numbered signalling electrodes with the driving wave form applied thereto from below. The reason for the difference is that since the driving wave form is applied to the even numbered signalling electrodes from below, i.e. remote from the display dots present on the upper side, it is severely attenuated by resistance of the signalling electrodes and other factors. And since the odd numbered signalling electrodes have the driving wave form applied thereto from above, the driving wave form on the signalling electrodes at the position of the display is scarcely attenuated. The driving wave form is thus distorted and a difference in the charge and discharge rate occurs, leading to a unevenness in the display.

In addition, unevenness may also be caused in a display for a further reason (polarity inversion cross talk). In this instance, when the polarity of the voltage impressed on the liquid crystal panel is inverted when the selected scanning electrode is changed, a disruption of the wave form according to a numeric value F, obtained through deducting the full number of display dots on each scanning electrode (namely the number of signalling electrodes) from the sum of the number of lit dots on the selected scanning electrode and the number of dots to be lit on the scanning electrode selected next, may arise on each scanning electrode.

When the numeric value F is negative, a rounding according to the absolute value of the numeric value F arises in the voltage wave form on each scanning electrode immediately after the selection is changed. When the numeric value F is positive, a spike voltage having a magnitude according to the absolute value of the numeric value F is generated tending towards the value of the lighting voltage. A substantial unevenness thus arises in the effective voltage applied to the display dots due to the waveform disruption, thus causing unevenness in the display.

The quality of a display on a liquid crystal panel is severely impaired by the unevenness.

It is an object of the present invention to provide a driving method for effecting a grey scale display free from such unevenness as are described above.

According to the present invention, there is provided a method for driving a liquid crystal panel having a plurality of scanning electrodes (Y1 to Y10) and a plurality of signalling electrodes (X1 to X10) intersecting one another to form a dot matrix in which alternate ones of the signalling electrodes are driven from opposite ends, the method comprising steps of: applying a driving voltage to each dot of a display pattern such that each said display dot is lit or is not lit in every frame of a display period with the frequency of lighting or not lighting each display dot being varied cyclically within the display period for generating a grey scale display; and controlling the application of the driving voltage such that a plurality of the said display dots on each scanning electrode are lit or not lit in phase with one another, characterised in that the liquid crystal panel is a colour panel, and in that the method further comprises a step of applying a correction to the driving voltage determined according to the form of the display pattern for offsetting disturbances generated in the driving voltage, the step of applying the correction comprising steps of applying a first correction determined according to the sum of the display dots lit on successively selected scanning electrodes minus the total number of dots available on any scanning electrode to the driving voltage when the polarity of the voltage impressed on the liquid crystal panel is not inverted according to the selection of the scanning electrode (Y1 to Y10) and applying a second correction determined according to the difference in the number of display dots lit on successively selected scanning electrodes to the driving voltage when the polarity of the voltage impressed on the liquid crystal panel is inverted when the selected scanning electrode (Y1 to Y10) is changed.

The display pattern itself may be a character, a graphic form or the like.

By means of the present invention, unevenness in a display due to stringing every other piece or polarity inversion may be prevented.

The present invention will be described further, by way of example, with reference tot he accompanying drawings, in which:

Figures 1(a) and only 1(b) are views of a liquid crystal panel to which a first embodiment of the present invention may be applied and illustrating display contents thereof;
Figures 2 (a) and 2 (b) are views showing driving wave forms in the first embodiment of the present invention;
Figures 3 (a) to 3 (c) are views of a liquid crystal panel to which a second embodiment of the present invention may be applied and illustrating display contents thereof; and
Figures 4 (a) and 4 (b) are views of a liquid crystal panel driven according to the prior art and illustrating display contents thereof.

Example 1

Figures 1 (a) and 1 (b) show a liquid crystal panel and its display patterns in a first frame and a second frame, respectively. The liquid crystal panel is shown diagrammatically with the references Y1 to Y10 representing scanning electrodes, and the references X1 to X10 representing signalling electrodes. In practice, the panel has a pair of substrates holding a liquid crystal therebetween, and the scanning electrodes Y1 to Y10 are formed on one of the substrates and the signalling electrodes X1 to X10 are formed on the other substrate. The scanning electrodes Y1 to Y10 and the signalling electrodes X1 to X10 as shown are limited to only ten each. However, this is to simplify the description, and a far greater number will be provided in practice. Locations where the scanning electrodes Y1 to Y10 and the signalling electrodes X1 to X10 intersect each other function to form display dots for creating a display, the display dots designated by the mark o being non-lit dots, and the display dots designated by the mark ● being lit dots. In this example, a square is displayed by a half tone image centrally of the panel (namely, the square defined by the scanning electrodes Y3 to Y8 and the signalling electrodes X3 to X8). As illustrated, the display dots on the odd numbered scanning electrodes (Y3, Y5, Y7) are not lit in the first frame but are lit in the second frame, and the display dots on the even numbered scanning electrodes (Y4, Y6, Y8) are lit in the first frame but not lit in the second frame, in both cases flickering on and off in phase with one another. However, according to the invention, this driving method for realising a tone display, in which two frames constitute one period and in which all the display dots on each respective scanning electrode flicker on and off in phase with one another irrespective of the positions of the associated signalling electrodes, is modified by superposing a correction voltage on the driving wave form impressed on the scanning electrodes Y1 to Y10 (here- inafter called the scanning voltage wave form) or on the driving wave form impressed on the signalling electrodes X1 to X10 (hereinafter called the signalling voltage wave form).

In the present embodiment, a constant correction voltage is applied to the scanning electrode during the time when it is not receiving the selection voltage (i.e. it is receiving a non-selection voltage) for a duration corresponding to the difference I (mentioned previously). Accordingly, when the difference I is negative, in the case where the polarity of the voltage impressed on the liquid crystal panel is not inverted when the selected scanning electrode is changed, correction voltages (V4U, V1L) having values between the non-selecting voltage and the non-lighting voltage are applied to each scanning electrode instead of the non-selection voltage for a time corresponding to an absolute value of the difference I. When the difference I is positive, the correction voltages (V4L, V1U) having values between the non-selection voltage and the lighting voltage are applied to each scanning electrode instead of the non-selection voltage for a time corresponding to the absolute value of the difference I.

Further, in the case where the polarity of the driving voltage impressed on the liquid crystal panel is inverted when the selected scanning electrode is changed from Yn to Yn + 1, a correction voltage is superposed on the scanning voltage wave form applied to the scanning electrodes Y1 to Y10, or on the signalling voltage wave form applied to the signalling electrodes X1 to X10, according to a value F obtained through deducting the number of signalling electrodes X1 to X10 from the sum of the number of lit dots on the selected scanning electrode Yn and the number of lit dots on the selected scanning electrode Yn + 1.

In the present embodiment, a constant correction voltage is applied to the scanning electrode instead of the non-selection voltage for a time corresponding to the numeric value F. Accordingly, when the numeric value F is positive, in the case where the polarity of the voltage impressed on the liquid crystal panel is inverted when the selected scanning electrode is changed, the correction voltages (V4U, V1L) having values between the non-selection voltage and the non-lighting voltage are applied to each scanning electrode instead of the non-selection voltage for a time corresponding to the absolute value of the numeric value F and, when the numeric value F is positive, the correction voltages (V4L, V1U) having values between the non-selection voltage and the lighting voltage are applied to each scanning electrode instead of the non-selection voltage for a time corresponding to the absolute value of the numeric value F.

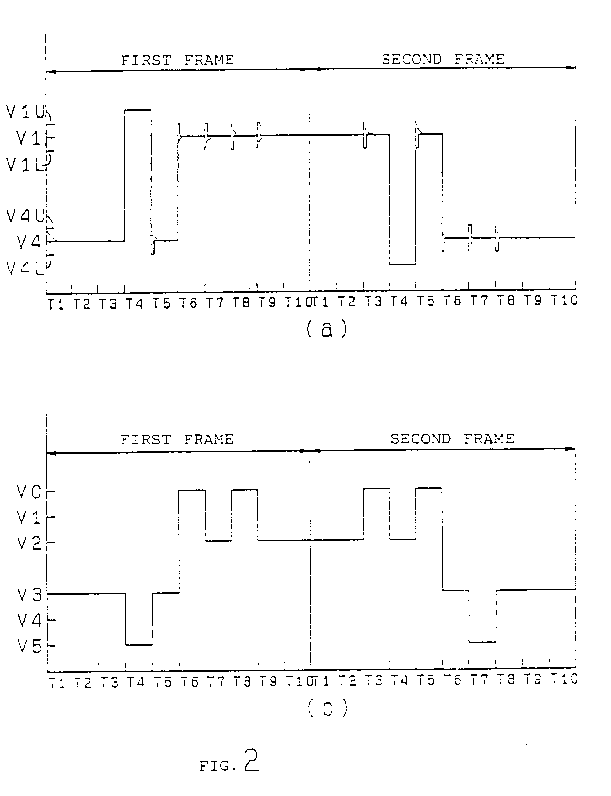

These two modes of correction, in which the driving wave form applied to the liquid crystal panel is modified, are both used together. Exemplary voltage wave forms according to the two correction modes are shown in Figures 2 (a) and 2 (b). A scanning voltage wave form impressed on the scanning electrode Y4 when the liquid crystal panel shows the display of Figure 1 is indicated in Figure 2 (a), and a signalling voltage wave form impressed on the signalling electrode X5 is indicated in Figure 2 (b), by a full line each. A voltage wave form indicated in Figure 2 (a) by a broken line represents a disturbance of the wave form applied to the scanning electrode Y4 arising at a position of the signalling electrode X5. The ordinate indicates voltage, and the abscissa indicates time. On the ordinate, VO, V1U, V1, V1L, V2, V3, V4U, V4, V4L, V5 each represent voltage values. Voltages V0 and V4 in the scanning voltage wave form are a selection voltage and a non-selection voltage, respectively, of a first set of such voltages, and voltages V5 and V1 are a selection voltage and a non-selection voltage, respectively, of a second set of such voltages. Similarly, voltages V5 and V3 in the signalling voltage wave form are a lighting voltage and a non-lighting voltage, respectively, in a first set of such voltages, and voltages V0 and V2 are a lighting voltage and a non-lighting voltage, respectively, is a second set of such voltages. Then, voltages V1U, V1L and V4U, V4L are correction voltages applied in place of the non-selection voltages V1 and V4.

Here,

$$V = V0 - V1$$

$$= V1 - V2$$

$$= V3 - V4$$

$$= V4 - V5$$

$$= a\,(V1U - V1)$$

$$= b\,(V1 - V1L)$$

$$= b\,(V4U - V4)$$

$$= a\,(V4 - V4L)$$

where $a$, $b$, $\geqq 1$.

Each of the two sets of selection and non-selection, and lighting and non-lighting, voltages are changed cyclically, thus keeping a DC voltage from being applied to the liquid crystal panel.

In the present embodiment, during one period consisting of the first frame and the second frame, each driving voltage is generated by the first sets of the voltages while the scanning electrodes Y1 to Y5 in the first frame are selected, is generated by the second sets of the voltages while the scanning electrodes Y6 to Y10 in the first frame and the scanning electrodes Y1 to Y5 in the second frame consecutive thereto are selected, and is generated again by the first sets of the voltage while the scanning electrodes Y6 to Y10 in the second frame are selected. Then, in the next period (not indicated) the first voltage set and the second voltage set replace one another, and each driving wave form is generated by the second sets of the voltages while the scanning electrodes Y1 to Y5 in the first frame are selected, is generated by the first sets of the voltages while the scanning electrodes Y6 to Y10 in the first frame and the scanning electrodes Y1 to Y5 in the second frame consecutive thereto are selected, and is generated again by the second sets of the voltages while the scanning electrodes Y6 to Y10 in the second frame are selected. The above process is then repeated.

Here, the state reverts in two periods (four frames) to prevent a DC voltage from being applied to the liquid crystal panel, and is not therefore of substantial duration. However, the change of state is not necessarily limited to the above, and an arbitrary number of changes and an arbitrary time interval may be employed, if necessary, before the state reverts so long as a DC voltage is not applied to the liquid crystal panel.

In Figures 2 (a) and 2 (b), the duration of each of the first frame and the second frame are shown. Further, the references T1 to T10 indicate the time in which each of the scanning electrodes Y1 to Y10 is respectively selected.

From Figure 1, the difference I and the numeric value F when the selection in every frame is changed will be as follows:

In the first frame:

When the selection is changed from the scanning electrode Y1 to the scanning electrode Y2:

$$I = 0 \qquad (F = -10)$$

When the selection is changed from the scanning electrode Y2 to the scanning electrode Y3:

$$I = 0 \qquad (F = -10)$$

When the selection is changed from the scanning electrode Y3 to the scanning electrode Y4:

$$I = -6 \qquad (F = -4)$$

When the selection is changed from the scanning electrode Y4 to the scanning electrode Y5:

$$I = 6 \qquad (F = -4)$$

When the selection is changed from the scanning electrode Y5 to the scanning electrode Y6:

$$I = (-6) \qquad (F = -4)$$

When the selection is changed from the scanning electrode Y6 to the scanning electrode Y7:

$$I = 6 \qquad (F = -4)$$

When the selection is changed from the scanning electrode Y7 to the scanning electrode Y8:

$$I = -6 \qquad (F = -4)$$

When the selection is changed from the scanning electrode Y8 to the scanning electrode Y9:

$$I = 6 \qquad (F = -4)$$

When the selection is changed from the scanning electrode Y9 to the scanning electrode Y10:

$$I = 0 \qquad (F = -10)$$

When the selection is changed from the scanning electrode Y10 in the first frame to the scanning electrode Y1 in the second frame:

$$I = 0 \qquad (F = -10)$$

Next, in the second frame:
When the selection is changed from the scanning electrode Y1 to the scanning electrode Y2:

$$I = 0 \qquad (F = -10)$$

When the selection is changed from the scanning electrode Y2 to the scanning electrode Y3:

$$I = 6 \qquad (F = -4)$$

When the selection is changed from the scanning electrode Y3 to the scanning electrode Y4:

$$I = 6 \qquad (F = -4)$$

When the selection is changed from the scanning electrode Y4 to the scanning electrode Y5:

$$I = -6 \qquad (F = -4)$$

When the selection is changed from the scanning electrode Y5 to the scanning electrode Y6:

$$I = (6) \qquad (F = -4)$$

When the selection is changed from the scanning electrode Y6 to the scanning electrode Y7:

$$I = -6 \qquad (F = -4)$$

When the selection is changed from the scanning electrode Y7 to the scanning electrode Y8:

$$I = 6 \qquad (F = -4)$$

When the selection is changed from the scanning electrode Y8 to the scanning electrode Y9:

$$I = 0 \qquad (F = -10)$$

When the selection is changed from the scanning electrode Y9 to the scanning electrode Y10:

$$I = 0 \qquad (F = -10)$$

When the selection is changed from the scanning electrode Y10 in the second frame to the scanning electrode Y1 in the first frame:

$$I = (0) \qquad (F = -10)$$

Here, the numeric values which are not parenthesised are effective. That is, when the selected scanning electrode is changed, if the first voltage set and the second voltage set do not change over (herein-after referred to as the polarity not being inverted), a correction is applied according to the difference I, but if they do change (hereinafter referred to as the polarity being inverted), then a correction is applied according to the numeric value F.

Accordingly, when a selected scanning electrode is changed where the polarity is not inverted, as indicated by broken lines covering the times T4 to T5, T6 to T7, T7 to T8, T8 to T9 of each frame of Figure 2 (a), a non-lighting voltage according to whether the difference I is positive or negative will be generated, and a disturbance in the form of a spike voltage corresponding to an absolute value of the difference I tending towards the lighting voltage may arise in the non-selection voltage. However, as indicated by the full line in Figure 2 (a), the correction voltages (V4L, V1U) tending towards the lighting voltage, or the correction voltages (V4U, V1L) tending towards the non-lighting voltage, are impressed on each of the scanning electrodes Y1 to Y10, instead of the non-selection voltage, according to whether the difference I is positive or negative for a time corresponding to the absolute value of the difference I, thereby substantially off setting such disturbance of the wave form.

Similarly, where the polarity is inverted, as indicated by broken lines covering the times T1 of the first frame and T5 to T6 of each frame, a disturbance of the scanning voltage wave form according to the absolute value of the numeric value F may arise tending towards the lighting or the non-lighting voltage according to whether the numeric value F is positive or negative. However, as indicated by the full line of Figure 2 (a), the correction voltages (V4U, V1L) tending towards the non-lighting voltage, or the correction voltages (V4L, V1U) tending towards the lighting voltage, are applied to each of the scanning electrodes Y1 to Y10, instead of the non-selection voltage, according to whether the numeric value F is positive or negative for a time corresponding to the absolute value of the numeric value F, thereby off setting the disturbance of the wave forms.

Thus, the scanning voltage wave form with the correction voltage is applied thereto as indicated by the full line of Figure 2 (a) is formed according to the difference I and the numeric value F.

As described, the wave form at any of the display dots within the liquid crystal panel in practice has correction voltages, countering a disturbance arising in the wave form, applied thereto for a time corresponding to the magnitude of the disturbance. Therefore, the disturbance is substantially off set by the correction voltages. Thus, the effective voltage applied to the display dots will be substantially corrected and a tone display free from uneveness will be obtainable.

Example 2

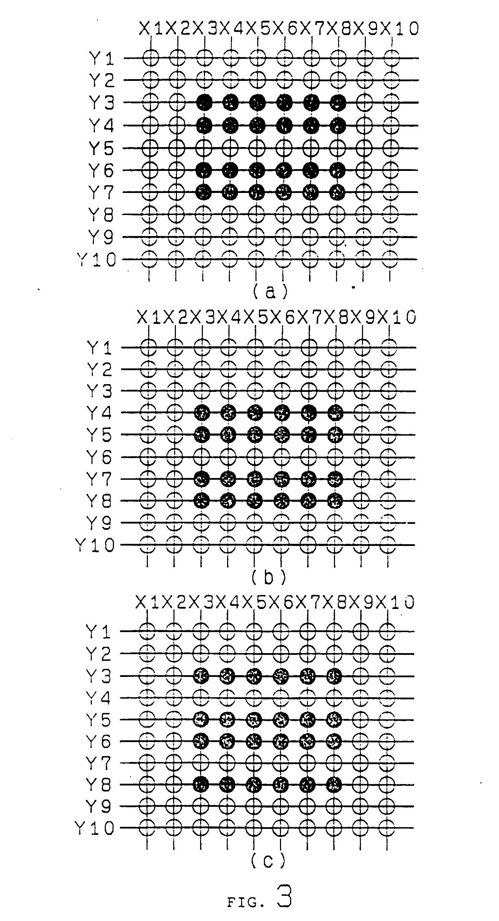

In the above example, having two frames in one period, a tone display is effected by lighting a display dot in one frame of the period and not lighting it in the next frame to cause flickering. When expressed by a value obtained by dividing the number of times of lighting the dot by the number of frames in one period, it may be seen that a depth of half the full tone may be obtained. However, not only half the tone but also various other depths of tone may be realised by the present invention. Figure 3 is illustrative thereof.

Figures 3 (a), 3 (b) and 3 (c) show display patterns in first, second and third frames, respectively, in the same liquid crystal panel as Figure 1. As illustrated, a square is displayed centrally. In the first frame, the display dots on the scanning electrodes (Y3, Y6), whose number is divisible by three, and the scanning electrodes (Y4, Y7) whose number divided by three leaves a remainder of one, are lit. Then, in the second frame, the display dots on the scanning electrodes (Y4, Y7), whose number divided by three leaves a remainder of one, and the scanning electrodes (Y5, Y8), whose number divided by three leaves a remainder of two, are lit. Further, in the third frame, the display dots on the scanning electrodes (Y3, Y6) whose number is divisible by three, and the scanning electrodes (Y5, Y8), whose number divided by three leaves a remainder of two, are lit.

Thus, the method employed for tone display here with the three frames constituting one period again causes all the display dots on each respective scanning electrode to flicker in phase irrespective of the positions of the signalling electrodes. At the same time, a correction voltage is superposed on the scanning voltage wave form or on the signalling voltage wave form according to the difference I, and a correction voltage is superposed on the scanning voltage wave form or on the signalling voltage wave form according to the numeric value F, in order to correct an effective voltage applied to the display dots substantially as in the case of Example 1. A tone display free from uneveness is obtainable in consequence.

With the three frames in one period, the display dots are lit in two frames within one period, and therefore two thirds of the full tone will be obtained in this case. Accordingly, a tone somewhat deeper than Example 1 is obtainable.

As described above, with the phase of the flickering cycles of all the display dots on a scanning electrode being the same, then according to the invention the number of frames in one period may be properly set, and the number of times the dots are lit within the one period may be adjusted, so as to realise an arbitrary tone display without producing uneveness. Needless to say, a plurality of different tones may be displayed concurrently.

In the above described Examples, while constant correction voltages are applied for a time corresponding to the difference I and the numeric value F, a similar effect will be obtainable from using a variable correction voltage according to the difference I and the numeric value F, e.g. as described in Japanese Patent Application No. 63-159914.

According to the present invention, uneveness in a display arising in the prior art when the first known display method is carried out may be prevented by changing the wave form for driving a liquid crystal panel according to the display pattern required on the liquid crystal panel. Thus, a driving method for effecting a tone display free from uneveness may be provided.

**Claims**

1. A method for driving a liquid crystal panel having a plurality of scanning electrodes (Y1 to Y10) and a plurality of signalling electrodes (X1 to X10) intersecting one another to form a dot matrix in which alternate ones of the signalling electrodes are driven from opposite ends, the method comprising steps of: applying a driving voltage to each dot of a display pattern such that each said display dot is lit or is not lit in every frame of a display period with the frequency of lighting or not lighting each display dot being varied cyclically within the display period for generating a grey scale display; and controlling the application of the driving voltage such that a plurality of the said display dots on each scanning electrode are lit or not lit in phase with one another, characterised in that the liquid crystal panel is a colour panel, and in that the method further comprises a step of applying a correction to the driving voltage determined according to the form of the display pattern for offsetting disturbances generated in the driving voltage, the step of applying the correction comprising steps of applying a first correction determined according to the sum of the display dots lit on successively selected scanning electrodes minus the total number of dots available on any scanning electrode to the driving voltage when the polarity of the voltage impressed on the liquid crystal panel is not inverted according to the selection of the scanning electrode (Y1 to Y10) and applying a second correction determined according to the difference in the number of display dots lit on successively selected scanning electrodes to the driving voltage when the polarity of the voltage impressed on the liquid crystal panel is inverted when the selected scanning electrode (Y1 to Y10) is changed.

2. A method according to claim 1 characterised in that the step of applying the correction comprises applying a constant correction voltage to the driving voltage for a duration determined according to the form of the display pattern.

3. A method according to claim 1 or claim 2 characterised in that a respective scanning voltage waveform is applied to each scanning electrode for generating the driving voltage, and in that the correction is applied to the scanning voltage waveform.

4. A method according to claim 3 characterised in that the correction is applied to a non-selection voltage of the scanning voltage waveform.

5. A method according to claim 1 characterised in that a respective signalling voltage waveform is applied to each signalling electrode for generating the driving voltage, and in that the correction is applied to the signalling voltage waveform.

**Patentansprüche**

1. verfahren zum Ansteuern einer Flüssigkristalltafel mit einer Mehrzahl von Abtastelektroden (Y1 bis Y10) und einer Mehrzahl von Signalisierungselektroden (X1 bis X10), welche einander schneiden, um eine Punktmatrix zu bilden, worin wechselnde der Signalisierungselektroden von entgegengesetzten Enden angetrieben werden, wobei das Verfahren folgende Schritte umfaßt: Anlegen einer Ansteuerspannung an jeden Punkt eines Anzeigenmusters, so daß jeder Anzeigenpunkt in jedem Rahmen einer Anzeigenperiode leuchtet oder nicht leuchtet, wobei die Frequenz des Leuchtens oder Nichtleuchtens jedes Anzeigenpunkts zyklisch innerhalb der Aneigenperiode variiert, um eine Grauskalaanzeige zu erzeugen; und Steuern des Anlegens der Ansteuerspannung, so daß eine Mehrzahl der Anzeigenpunkte auf jeder Abtastelektrode in Phase miteinander leuchten oder nicht leuchten, dadurch gekennzeichnet, daß es sich bei der Plussigkristalltafel um eine Farbtafel handelt, und daß das Verfahren des weiteren einen Schritt der Anwendung einer Korrektur auf die Ansteuerspannung umfaßt, die gemäß der Form des Anzeigenmusters bestimmt wird, um Störungen auszugleichen, welche in der Ansteuerspannung entstanden sind, wobei der Schritt der Anwendung der Korrektur die Schritte der Anwendung einer ersten Korrektur, welche gemäß der Summe der Anzeigenpunkte, welche auf sukzessiv ausgewählten Ansteuerelektroden leuchten, minus der Gesamtzahl an Punkten bestimmt wird, welche auf jeder Abtastelektrode verfügbar sind, auf die Ansteuerspannung, wenn die Polarität der Spannung, welche der Flüssigkristalltafel aufgeprägt ist, nicht invertiert ist gemäß der Auswahl der Abtastelektrode (Y1 bis Y10), und Anwendung einer zweiten Korrektur, welche gemäß der Differenz in der Zahl von Anzeigenpunkten bestimmt wird, welche auf sukzessiv ausgewählten Ansteuerelektroden leuchten, auf die Ansteuerspannung, wenn die Polarität der Spannung, welche der Flüssigkristalltafel aufgeprägt ist, invertiert ist, wenn die ausgewählte Abtastelektrode (Y1 bis Y10) geändert wird, umfaßt.

2. Verfahren gemäß Anspruch 1, dadurch gekennzeichnet, daß der Schritt der Anwendung der Korrektur das Anlegen einer Konstantkorrekturspannung an die Ansteuerspannung über eine Dauer umfaßt, die gemäß der Form des Anzeigenmusters bestimmt wird.

3. Verfahren gemäß Anspruch 1 oder Anspruch 2, dadurch gekennzeichnet, daß eine entsprechende Abtastspannungewellenform an jede Abtastelektrode zur Erzeugung der Ansteuerspannung angelegt wird, und daß die Korrektur an die Abtastspannungswellenform angelegt wird.

**4.** Verfahren gemäß Anspruch 3, dadurch gekennzeichnet, daß die Korrektur auf eine Nicht-Selektions-Spannung der Abtastspannungswellenform angewendet wird.

**5.** Verfahren gemäß Anspruch 1, dadurch gekennzeichnet, daß eine entsprechende Signalisierungsspannungswellenform an jede Signalisierungselektrode zur Erzeugung der Ansteuersapannung angelegt wird, und daß die Korrektur auf die Signalisierungsspannungswellenform angewendet wird.

**Revendications**

**1.** Procédé de pilotage d'un panneau à cristaux liquides ayant plusieurs électrodes de balayage (Y1 à Y10) et plusieurs électrodes de signalisation (X1 à X10) qui se recoupent pour former une matrice de points dans laquelle les électrodes de signalisation qui alternent sont pilotées à partir d'extrémités opposées, le procédé comprenant les étapes suivantes : l'application d'une tension de pilotage à chaque point d'un dessin d'affichage afin que chaque point d'affichage soit éclairé ou non éclairé dans chaque trame d'une période d'affichage, la fréquence d'éclairement ou l'absence d'éclairement de chaque point d'affichage variant cycliquement dans la période d'affichage pour la création d'un affichage à échelle de gris, et le réglage de l'application de la tension de pilotage afin que plusieurs des points d'affichage de chaque électrode de balayage soient éclairés ou non éclairés en phase mutuellement, caractérisé en ce que le panneau à cristaux liquides est un panneau en couleurs, et en ce que le procédé comporte en outre une étape d'application d'une correction à la tension de pilotage déterminée d'après la forme du dessin d'affichage pour compenser les perturbations créées dans la tension de pilotage, l'étape d'application de la correction comprend des étapes d'application d'une première correction déterminée d'après la somme des points d'affichage éclairés sur des électrodes de balayage choisies successivement réduite du nombre total de points disponibles sur chaque électrode de balayage pour la tension de pilotage lorsque la polarité de la tension appliquée au panneau à cristaux liquides n'est pas inversée suivant la sélection de l'électrode de balayage (Y1 à Y10), et d'application d'une seconde correction déterminée d'après la différence entre le nombre de points d'affichage éclairés sur des électrodes de balayage choisies successivement pour la tension de pilotage lorsque la polarité de la tension appliquée au panneau à cristaux liquides est inversée et que l'électrode choisie de balayage (Y1 à Y10) est changée.

**2.** Procédé selon la revendication 1, caractérisé en ce que l'étape d'application de la correction comprend l'application d'une tension constante de correction à la tension de pilotage pendant une durée déterminée suivant la forme du dessin d'affichage.

**3.** Procédé selon la revendication 1 ou 2, caractérisé en ce qu'une forme d'onde respective de tension de balayage est appliquée à chaque électrode de balayage pour la création d'une tension de pilotage, et en ce que la correction est appliquée à la forme d'onde de tension de balayage.

**4.** Procédé selon la revendication 3, caractérisé en ce que la correction est appliquée à une tension de non sélection de la forme d'onde de tension de balayage.

**5.** Procédé selon la revendication 1, caractérisé en ce qu'une forme d'onde de tension respective de signalisation est appliquée à chaque électrode de signalisation pour la création de la tension de pilotage et en ce que la correction est appliquée à la forme d'onde de tension de signalisation.

( a )

( b )

FIG. 1

FIG. 2

X1X2X3X4X5X6X7X8X9X10

Y1
Y2
Y3
Y4
Y5
Y6
Y7
Y8
Y9
Y10

(a)

X1X2X3X4X5X6X7X8X9X10

Y1
Y2
Y3
Y4
Y5
Y6
Y7
Y8
Y9
Y10

(b)

X1X2X3X4X5X6X7X8X9X10

Y1
Y2
Y3
Y4
Y5
Y6
Y7
Y8
Y9
Y10

(c)

FIG. 3

(a)

(b)

FIG. 4